# EUROPEAN PATENT APPLICATION

(11) **EP 1 172 937 A2**
(43) Date of publication of application: **16.01.2002**
(21) Application number: 01305938.1
(22) Date of filing: 10.07.2001
(51) Int. Cl.: H04B 1/20, H04M 1/725

(54) **Portable electronic device including dual transceivers**

(30) Priority: 12.07.2000 US 614335
(71) Applicant: Johnson Controls Technology Company, Plymouth, Michigan 48170 (US)
(72) Inventor: Geerlings, Steven L., Zeeland, Michigan 49464 (US)
(74) Representative: Dealtry, Brian

(57) **Abstract**

A portable electronic device for learning and transmitting an activation signal. The device includes a first radio frequency transceiver for generating an activation signal, and a second radio frequency transceiver for providing remote telecommunications. The device includes a radio frequency carrier signal modulated with a code for remotely actuating a device. A password may be implemented by the device to facilitate secure operation.

## Description

### BACKGROUND OF THE INVENTION

This invention relates to radio frequency transceivers, and more particularly to a trainable radio frequency transceiver for remotely controlling one or more devices.

A trainable transmitter for remotely actuating a garage door opening mechanism is disclosed in U.S. Patent No. 4,241,870 entitled "Remote Transmitter and Housing" which is hereby incorporated by reference. This trainable transmitter learns radio frequency control signals of the type used to remotely actuate devices such as garage door opening mechanisms. In a learning mode, the transceiver identifies the carrier frequency and code of a control signal transmitted by a radio frequency remote control. In a transmitting mode, the transmitter emits a control signal having the carrier frequency and the code of the learned signal.

An improved trainable transmitter having additional advantages and characteristics is described in U.S. Patent No. 5,442,340 entitled "Trainable RF Transmitter Including Attenuation Control" which is hereby incorporated by reference. The improved transmitter includes an attenuator for adjusting the level of an output signal as a function of the pulse width and frequency of the output signal. The transmitter also includes receiver components which are disabled when the transmitter is transmitting.

Although these transmitters provide novel, versatile, trainable transmitters, it remains desirable to provide additional improvements in the accessibility and ease of operation. For example, the trainable transmitters typically are located within an automotive vehicle and therefore are not often portable. Accordingly, if it is desirable to operate some characteristic using the trainable transmitter, one must gain accessibility to the automotive vehicle prior to operating the trainable transmitter. This may create a problem if, for example, the operator is returning from a walk and desires to open a garage door to gain access to the home.

### SUMMARY OF THE INVENTION

The present invention relates to a portable electronic device for learning and transmitting an activation signal that includes a radio frequency (RF) carrier frequency modulated with a code for remotely actuating an apparatus such as a garage door. According to one preferred embodiment, the portable electronic device includes a first radio frequency (RF) trainable transceiver for generating an activity signal which is used for operating a garage door and the like. A second RF transceiver may be provided that enables remote telecommunications capability to the portable electronic device.

In a preferred embodiment of the invention, the portable electronic device includes a cellular telephone. In yet another preferred embodiment, the portable electronic device includes a personal digital assistant (PDA). Transmitter access keys are located at a predetermined location on the PDA. In yet another preferred embodiment, the portable electronic device includes a portable message receiver/transceiver such as a pager.

A primary advantage of the present invention is to provide a portable electronic device that includes a trainable transmitter for learning and transmitting an activation signal that includes radio frequency devices such as garage door openers, without the need to be in a vehicle for actuation. The portable electronic device could address telecommunications functions as those incorporated in cellular telephones, personal digital assistants, and digital pagers in addition to opening a garage door and turning on house lights. Accordingly, one would not have to carry a set of keys nor a separate garage door opener when visiting a neighbor's house.

Another advantage of the present invention is that manufacturers of telecommunications devices such as cellular telephones, personal digital assistants, and digital pagers would be able to sell more products if they could distinguish themselves from the competition by offering a portable electronic device that includes a trainable transmitter.

### BRIEF DESCRIPTION OF THE DRAWINGS

The various advantages of the present invention will become apparent to one skilled in the art by reading the following specification and subjoined claims and by referencing the following drawings in which:
Figure 1 is a perspective view of the portable electronic device in accordance with a preferred embodiment of the present invention where the device includes a cellular telephone and distinct access buttons;
Figure 2 is an electrical circuit diagram partly in block and schematic form of a transceiver embodying the present invention as shown in Figure 1;
Figure 3 is a perspective view of an alternative preferred embodiment of the present invention integrally incorporating the cellular telephone within the portable electronic device;
Figure 4 is a perspective view of an alternative preferred embodiment of the present invention in which the portable electronic device includes a personal digital assistant; and
Figure 5 is a perspective view of an alternative preferred embodiment of the present invention incorporating the personal digital assistant within a portable electronic device.

### DETAILED DESCRIPTION OF THE PREFERRED EMBODIMENTS

The following description of the preferred embodiment concerning a portable electronic device is merely exemplary in nature and is not intended to limit the invention or its application or uses. Moreover, while the present invention is described in detail below with reference to use with a cellular telephone and a personal digital assistant, it will be appreciated by those skilled in the art that the present invention is clearly not so limited and may be used with other types of devices as well.

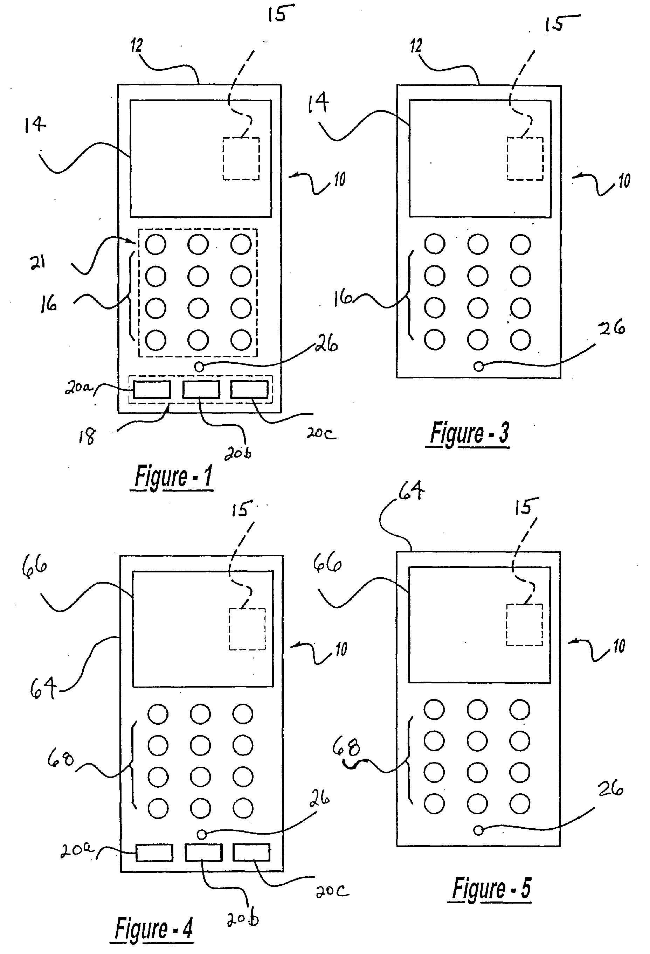

As shown in Figure 1, a portable electronic device is disclosed and generally designated by the numeral 10. The portable electronic device 10 includes a telecommunication device in the form of a cellular telephone 12 which is used to provide remote telecommunications capability to the user. The portable electronic device 10 includes a display 14 for displaying telephone numbers and other data which may be required for operation of the cellular telephone 12. The display 14 of the portable electronic device 10 may be used to display a visual symbol 15 which indicates the operational status of the portable electronic device 10. The symbol 15 and an indicator discussed below may be used to simultaneously display the operating status of the portable electronic device 10.

In addition, the portable electronic device 10 further includes a keypad 16 which is able to be used to enter data to such telephone numbers. In addition, the keypad 16 may be used to enter a password for operation of the portable electronic device 10. The password code would be entered from the keypad 16 of the portable electronic device 10 in a manner very similar to the security code entered for the identification of the cellular telephone user.

The portable electronic device 10 includes a first radio frequency transceiver 18 which is used for selectively transmitting a coded radio frequency (RF) control signal to an apparatus controlled by the RF control signal, such as a garage door opening mechanism. The conventional garage door opening mechanism includes a receiver and a control circuit which responds to the control signal for opening and closing a garage door as is shown in U.S. Patent No. 5,442,340. In addition, the portable electronic device 10 also includes a second radio frequency transceiver 21 which enables the cellular telephone 12 to perform normal telecommunications as is known in the art. As will be appreciated by those skilled in the art, the second radio frequency transceiver 21 may be replaced by an RF receiver if only one-way telecommunication capability is desired.

The first radio frequency transceiver 18 receives information from the user by means of the switches 20a, 20b, and 20c. The switches 20a, 20b, and 20c are used to provide communications with a respective radio frequency controlled apparatus such as a garage door opener, remotely controlled lights, and other comparable electronic devices. Each switch is associated with a respective channel, and each channel includes one control signal for remotely actuating one mechanism. For example, the switches 20a, 20b and 20c may be associated with three different garage door opening mechanisms. Alternatively, two of the channels can generate signals for two garage door openers, and the third channel can generate a signal for controlling an interior light, exterior lights, or other remote controlled devices.

As shown in Figure 2, the transceiver 18 includes a programmable microcontroller 22 which controls a radio frequency circuit 24 to generate a signal. The signal has a frequency and code learned from a signal transmitted by an existing remote control transmitter (not shown) of the garage door opening mechanism (not shown). The transceiver 18 can then transmit the stored signal as a remote control signal to activate the garage door opening control mechanism.

An indicator 26 is provided on the portable electronic device 10 to inform the operator of the operational mode. For example, the indicator 26 is illuminated continuously while the signal is being transmitted by the transceiver 18. When the portable electronic device 10 is in the learning mode, the indicator 26 flashes. When the training mode is finished, the indicator 26 flashes at a rate faster than when in the learning mode rate.

The microcontroller 22 includes three inputs 40, each of which is connected to a respective one of the switches 20a, 20b, and 20c through the diodes 32a, 34a and 36a as well as a conventional interface 38. The microcontroller inputs 40 are pulled to ground when its respective switch is closed. The switches 20a, 20b and 20c are also connected through the diodes 32b, 34b and 36b to a transistor 42. The transistor 42 is connected between the vehicle battery supply (not shown) and the power supply 44 such that it is closed when any one of the switches 20a, 20b and 20c is closed. The indicator 26 illuminates when one of the switches 20a, 20b and 20c is closed and flashes when the circuit enters the training mode for one of the switches.

The microcontroller 22 preferably includes a nonvolatile memory (NVM) (not shown) in which the microcontroller program is stored. The power supply 44 provides a regulated 5 volt DC reference potential at terminal 50 and a regulated 12 volt DC reference potential at terminal 52. Circuits for providing the regulated voltage are well known. The power supply 44 receives power from the vehicle battery through the transistor 42 and the battery positive conductor 54. The microcontroller 22 includes a power supply input 56 connected to the 5 volt power supply output terminal 50 to receive power therefrom. Accordingly, when one of switches 20a, 20b and 20c is closed, thereby causing the transistor 42 to conduct, power is supplied to the radio frequency circuit 24 and the microcontroller 22. When the transistor 42 is nonconducting (switches 20a, 20b, and 20c are opened), the microcontroller 22 and the radio frequency circuit 46 are disabled since the power supply is disabled. The output terminal 60 of the microcontroller 22 is connected to the indicator 26 to energize the indicator 26.

An interconnection medium 62 couples the first transceiver 18 to the second RF transceiver 21. This interconnection medium 62 may be an electronic circuit which integrates additional circuits that would be otherwise separately required for both the transceiver 18 and remote telecommunications functions of the second transceiver 21.

Another preferred embodiment of the preferred invention is shown in Figure 3, in which elements that are similar to those described in the embodiment shown in Figure 1 have identical reference numbers. In this regard, the portable electronic device 10 shown in Figure 3 includes a cellular telephone 12 and has the indicator 26 located at a predetermined location on the cellular telephone 12. The cellular telephone display 14 displays the status of the telephone parameters and the status of the operation of the portable electronic device 10 by a symbol 15 such as an icon. Here again, the symbol 15 and the indicator 26 both indicate the operational status of the portable electronic device 10. In Figure 3, the functions of the switches 20a, 20b, and 20c referenced in Figure 2 are incorporated as functions in the cellular telephone keypad 16. A plurality of radio frequency channels are available by sequentially selecting a number combination on the cellular telephone keypad 16.

Another embodiment of the present invention will now be described with reference to Figure 4, in which elements that are similar to those described in the embodiment shown in Figure 1 have identical reference numbers. In this regard, the portable electronic device 10 includes a personal digital assistant (PDA) 64. The PDA 64 has operational keys which are associated with a display area 66. The PDA 64 includes switches 20a, 20b and 20c associated with the indicator 26, and are located at predetermined locations on the PDA 64. The display area 66 of the PDA 64 displays the status of the portable electronic device 10 by the appearance of a symbol 15 such as an icon when one of the switches 20a, 20b, and 20c is selected. The operational status of the portable electronic device 10 is viewable in the display area 66. Here again, the symbol 15 and the indicator 26 simultaneously display the status of the portable electronic device 10. A security password, as mentioned above, may be implemented by accessing the operational keys 68 of the PDA 64. As will be appreciated by those skilled in the art, the PDA 64 may or may not have telecommunications capability.

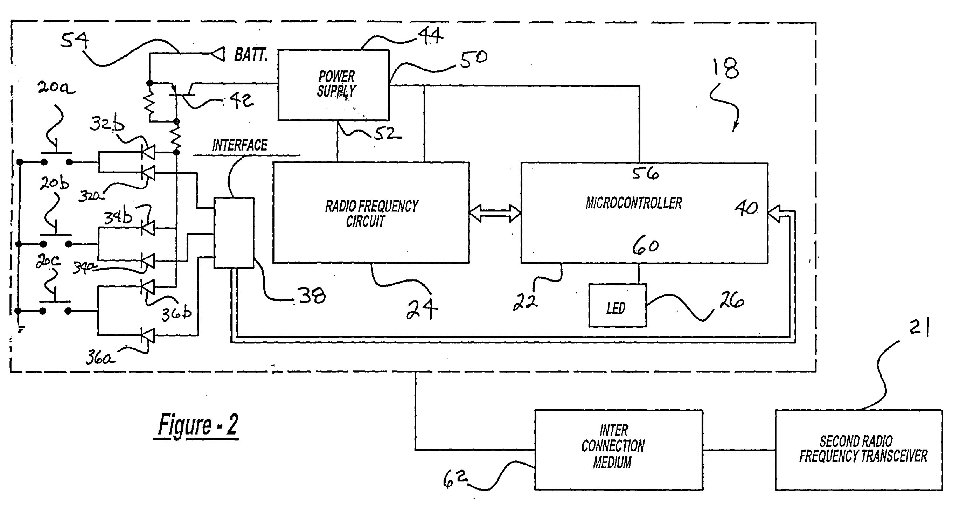

Figure 5 illustrates yet another embodiment of the portable electronic device 10 according to the present invention, in which elements that are similar to those described in the embodiment shown in Figure 1 have identical reference numbers. Here, the portable electronic device 10 has the functions of the switches 20a, 20b, and 20c referenced in Figure 4 incorporated as functions in the operational keys 68 of the PDA 64 shown in Figure 5. A plurality of radio frequency channels are available by sequentially selecting a number combination on the operational keys 68. An indicator 26 is located at a predetermined location on the PDA 64. A display area 66 displays the functions of the PDA 64 as well as a symbol 15 such as an icon, which apprises the user of the status of the device 10. The PDA 64 also includes capability that the operational keys 68 may be used to enter a security code for accessing the operation parameters of the device 10.

The present invention may also be used with other types of telecommunications devices such as a digital pager (not shown). Incorporation of the present invention within one of these telecommunication devices would require similar design structure as the aforementioned embodiments.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification, and following claims.

## Claims

1. A portable electronic device for transmission and reception of radio frequencies, said portable electronic device comprising:
a transceiver for learning and transmitting an activation signal that includes a radio frequency carrier frequency modulated with a code for remotely actuating an external device; and
a telecommunications device for providing remote telecommunications to a user, said telecommunications device including a display for displaying operational data of the second transceiver.

2. The portable electronic device according to Claim 1, wherein said telecommunications device includes a cellular telephone.

3. The portable electronic device according to Claim 1, wherein said telecommunications device includes a personal digital assistant.

4. The portable electronic device according to Claim 1, wherein said telecommunications device includes a digital pager.

5. The portable electronic device according to Claim 1, further including an indicator for displaying the status of said transceiver.

6. The portable electronic device according to Claim 1, wherein the display of said telecommunications device includes an indicator for displaying the operational data of said transceiver.

7. The portable electronic device according to Claim 1, wherein said telecommunications device includes a member from a group including cellular telephones, personal digital assistants, and digital pagers.

8. A method for learning and transmitting an activation signal that remotely actuates a device, said method comprising the steps of:
providing a portable electronic device having a radio frequency transceiver for generation of an activation signal, including the substeps of:
receiving the activation signal in a learning mode;
generating an output signal having a radio frequency carrier corresponding to that of the received activation signal;
transmitting the output signal to the device; and
providing a telecommunications device within said portable electronic device for providing remote telecommunications with the user.

9. The method as defined in Claim 8, further comprising the step of providing an indicator for indicating the status of said portable electronic device.

10. The method as defined in Claim 8, wherein said step of providing a telecommunications device includes the step of providing a cellular telephone.

11. The method as defined in Claim 8, wherein said step of providing a telecommunications device includes the step of providing a personal digital assistant.

12. The method as defined in Claim 8, wherein said step of providing a telecommunications device includes the step of providing a digital pager.

13. A portable electronic device for learning and transmitting an activation signal that includes a radio frequency modulated with a code for remotely actuating an external device, said portable electronic device comprising:
a radio frequency transceiver for learning and transmitting an activation signal that includes a radio frequency carrier frequency modulated with a code for remotely activating the external device; and
a personal digital assistant.

14. The portable electronic device as defined in Claim 13, wherein said radio frequency transceiver includes an indicator to display the status of said portable electronic device.

15. The portable electronic device as defined in Claim 13, wherein said portable electronic device includes a display to provide visual status of said personal digital assistant.

16. The portable electronic device as defined in Claim 13, further including a cellular telephone.

17. The portable electronic device as defined in Claim 13, further including a digital pager.
